# EUROPÄISCHE PATENTSCHRIFT

(11) **EP 3 196 521 B1**
(45) Veröffentlichungstag und Bekanntmachung des Hinweises auf die Patenterteilung: **24.10.2018**
(21) Anmeldenummer: 16205253.4
(22) Anmeldetag: 20.12.2016
(51) Int. Cl.: F16K 31/122, F16K 41/02, F16K 41/10, F16K 1/36, F16K 7/16

(54) **VENTILSYSTEM**
VALVE SYSTEM
SYSTÈME DE SOUPAPE

(30) Priorität: 19.01.2016 DE 102016100770
(43) Veröffentlichungstag der Anmeldung: 26.07.2017
(73) Patentinhaber: Gemü Gebr. Müller Apparatebau GmbH & Co. Kommanditgesellschaft, 74653 Ingelfingen (DE)
(72) Erfinder: STARK, Carmen, 74586 Frankenhrdt (DE); FRANKENBACH, Klaus, 74670 Forchtenberg-Schleierhof (DE)
(74) Vertreter: DREISS Patentanwälte PartG mbB

(56) Entgegenhaltungen:
- EP-A1- 0 501 328
- EP-A1- 1 641 622
- DE-A1- 3 439 153
- US-A- 1 509 508
- US-A- 2 558 687
- US-A- 3 085 592
- US-A- 3 422 608

## Beschreibung

Die Erfindung betrifft ein Ventilsystem zum Einsatz in Produktions- und Abfüllanlagen der pharmazeutischen Industrie, der Biotech-Industrie sowie der Lebensmittelindustrie nach dem Oberbegriff des Anspruchs 1 sowie ein Verfahren zum Betreiben eines Ventilsystems nach dem nebengeordneten Anspruch.

Die DE 100 24 441 A1 offenbart eine Ventilanordnung mit einem Hauptventil und einem Bypassventil. Das Hauptventil ist als Membranventil ausgebildet. Das Bypassventil sitzt in einem zweiten Strömungsweg, der parallel zu einem ersten Strömungsweg des Hauptventils angeordnet ist. Die bekannte Ventilanordnung dient zum Schalten von Fluiden, insbesondere von Gasen. Die US 3,422,608 betrifft eine Baumwoll-Erntemaschine mit einer speziellen Hydraulikansteuerung. Die US 1,509,508 betrifft ein kombiniertes Rückschlag-, Nadel- und Sicherheitsventil. Die US 3,085,592 beschreibt einen Ventilmechanismus mit 2 kombinierten Ventileinrichtungen. Die DE 3439153 A1 beschreibt ein Strömungsprüfgerät.

Aufgabe der vorliegenden Erfindung ist es, ein Ventilsystem bereitzustellen, welches in Produktions- und Abfüllanlagen der pharmazeutischen Industrie, der Biotech-Industrie sowie der Lebensmittelindustrie für aseptische Anwendungen besonders gut geeignet ist.

Diese Aufgabe wird durch ein Ventilsystem mit den Merkmalen des Anspruchs 1 und ein Verfahren mit den Merkmalen des nebengeordneten Patentanspruchs gelöst. Vorteilhafte Weiterbildungen des erfindungsgemäßen Ventilsystems sind in Unteransprüchen angegeben. Für die Erfindung wichtige Merkmale finden sich darüber hinaus in der nachfolgenden Beschreibung und in der Zeichnung. Die Merkmale können dabei sowohl in Alleinstellung als auch in ganz unterschiedlichen Kombinationen für die Erfindung wichtig sein, ohne dass hierauf nochmals gesondert hingewiesen wird.

Bei dem erfindungsgemäßen Ventilsystem ist der minimale Strömungsquerschnitt des zweiten und durch das Bypassventil geschalteten Strömungswegs größer als der minimale Strömungsquerschnitt des ersten und durch das Hauptventil geschalteten Strömungswegs. Dies gestattet es, das Hauptventil als Kleinstmengen-Regelventil auszugestalten, welches auch in geöffnetem Zustand nur eine geringe Fluidmenge vom Einlassanschluss zum Auslassanschluss strömen lässt. Gleichwohl kann über den zweiten Strömungsweg und das dort vorhandene Bypassventil eine vergleichsweise große Fluidmenge geleitet werden, durch die eine Reinigung und/oder Spülung des gesamten ersten Strömungswegs oder zumindest eines Bereichs des ersten Strömungswegs möglich ist.

Auch können auf diese Weise produktführende Räume und Kanäle von Anlagenkomponenten, in die das erfindungsgemäße Ventilsystem eingebaut ist, und produktführende Leitungen zwischen diesen Anlagenkomponenten besonders effizient gereinigt und/oder gespült werden. Dabei versteht es sich, dass das Reinigung- und/oder Spülfluid nicht zwingend über den Einlassanschluss oder den Auslassanschluss eingeleitet wird, sondern auch an einer anderen Stelle innerhalb der Anlage, in die das erfindungsgemäße Ventilsystem eingebaut ist. Der erwähnte Reinigungs- und/oder Spülvorgang betrifft also nicht nur das erfindungsgemäße Ventilsystem, sondern kann eine ganze Leitung betreffen, in die das Ventilsystem eingebaut ist. Ein Einleiten und/oder Ausleiten an einer anderen Stelle kann beispielsweise auch dann von Vorteil sein, wenn es darum geht, das Reinigungs- und/oder Spülfluid nach dem Reinigungs- und/oder Spülvorgang wieder aus dem gereinigten bzw. gespülten Leitungsabschnitt abzulassen.

Soll das Hauptventil gereinigt werden, öffnet das Bypassventil und das Reinigungsmedium strömt vom Einlassanschluss über den zweiten Strömungsweg und das Bypassventil zum Auslassanschluss. Das Hauptventil wird dabei durch die auftretenden Scherkräfte gereinigt. Aufgrund des vergleichsweise großen Strömungsquerschnitts des zweiten Fluidwegs kann die hierfür erforderliche und relativ hohe Strömungsgeschwindigkeit gewährleistet werden.

Hierdurch ist das erfindungsgemäße Ventilsystem besonders geeignet zum Einsatz in Produktions- und Abfüllanlagen der pharmazeutischen Industrie, der Biotech-Industrie sowie der Lebensmittelindustrie, da insbesondere dort gesetzliche Vorschriften, welche die Hygiene betreffen, eingehalten werden müssen. Das erfindungsgemäße Ventilsystem ermöglicht es, dass ein entsprechendes Reinigungsfluid oder Sterilisationsmedium den gesamten zweiten Strömungsweg und sämtliche dort vorhandenen Komponenten kontaktieren kann. Auch stromaufwärts und/oder stromabwärts von dem Ventilsystem angeordnete Anlagenkomponenten können aufgrund des vergleichsweise großen Strömungsquerschnitts im zweiten Strömungsweg zuverlässig gereinigt werden, da eine gewünschte (hohe) und definierte Strömungsgeschwindigkeit eingehalten werden kann.

Das erfindungsgemäße Ventilsystem zeichnet sich ferner dadurch aus, dass der zweite Strömungsweg in eine Ventilkammer des Hauptventils mündet. Hierdurch kann die Ventilkammer und können die in dieser vorhandenen Komponenten des Hauptventils besonders zuverlässig gereinigt werden.

Außerdem ist bei dem erfindungsgemäßen Ventilsystem vorgesehen, dass der zweite Strömungsweg im Bereich seiner Mündung in die Ventilkammer auf eine Wand der Ventilkammer und/oder auf eine in der Ventilkammer vorhandene Komponente des Hauptventils gerichtet ist. Dies hat zur Folge, dass ein aus der Mündung des zweiten Strömungswegs in die Ventilkammer eintretender Fluidstrahl zunächst auf ein festes Hindernis prallt und hierdurch verwirbelt wird, wodurch auch an an sich unzugänglichen Stellen innerhalb der Ventilkammer eine ausreichende Strömungsgeschwindigkeit erzeugt und damit vergleichsweise hohe Scherkräfte zum Mitreißen von Verunreinigungen bewirkt werden.

Das Hauptventil kann ein Sitzventil mit einem umlaufenden Ventilsitz sein, und das Bypassventil kann ein Membranventil mit einem stegförmigen Ventilsitz sein. Eine derartige Ausgestaltung des Hauptventils gestattet eine feinfühlige Steuerung bzw. Regelung des Fluidstroms über den ersten Strömungsweg, und zwar auch dann, wenn dieser Fluidstrom nur sehr gering ist. Gleichzeitig werden durch die vorgeschlagene Ausgestaltung des Bypassventils Kanten und Vorsprünge im Bypassventil vermieden, welche selbst wiederum zur Anlagerung von Verunreinigungen führen können.

In Weiterbildung hierzu wird vorgeschlagen, dass ein Ventilelement des Hauptventils einen Membranabschnitt umfasst, der das Ventilelement gegenüber einem Ventilgehäuse abdichtet. Hierdurch wird nicht nur eine sichere Abdichtung des Ventilelements gegenüber dem Ventilgehäuse geschaffen, sondern es wird durch die Membran eine vergleichsweise glatte Oberfläche bereitgestellt, welche die Möglichkeiten zur Anlagerung von Verunreinigungen im Betrieb des Ventilsystems vermindert.

Vorteilhaft ist es, wenn ein Ventilelement des Hauptventils einen abragenden Zapfen aufweist, der bei geschlossenem Hauptventil in einen stromaufwärts von einem Ventilsitz des Hauptventils gelegenen Abschnitt des ersten Strömungswegs eingetaucht ist. Mit einer solchen Ausgestaltung wird zumindest bei nicht vollständig geöffnetem Hauptventil eine Drosselstelle stromaufwärts vom Ventilsitz des Hauptventils geschaffen, wodurch die präzise Steuerung und Regelung besonders kleiner Fluidmengen ermöglicht wird. Insbesondere ein solches Hauptventil wird daher auch als "Kleinstmengen-Regelventil" bezeichnet.

Vorgeschlagen wird, dass das Bypassventil manuell und das Hauptventil pneumatisch, elektromagnetisch oder elektromotorisch betätigt werden. Hierdurch wird der Tatsache Rechnung getragen, dass ein Reinigen und/oder Spülen des Ventilsystems nur relativ selten erfolgen muss, so dass hierfür ein vergleichsweise preiswertes manuell betätigbares Bypassventil eingesetzt werden kann.

Nachfolgend wird eine Ausführungsform der Erfindung unter Bezugnahme auf die beiliegende Zeichnung erläutert. In der Zeichnung zeigen:
- Figur 1: ein hydraulisches Schaltbild eines erfindungsgemäßen Ventilsystems mit einem Hauptventil und einem Bypassventil;
- Figur 2: eine perspektivische Außenansicht des Ventilsystems von Figur 1;
- Figur 3: einen Längsschnitt in einer erste Ebene durch das Ventilsystem von Figur 2 bei geschlossenem Hauptventil;
- Figur 4: einen Längsschnitt in einer zweite Ebene durch das Ventilsystem von Figur 2 bei geöffnetem Hauptventil; und
- Figur 5: ein Detail von Figur 3 bei geöffnetem Hauptventil.

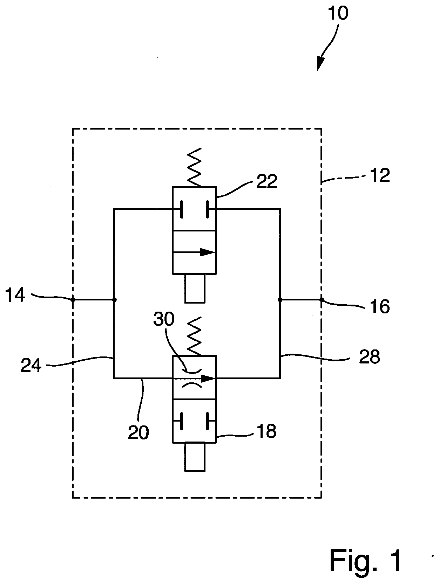

In den Figuren trägt ein Ventilsystem insgesamt das Bezugszeichen 10. Es umfasst ein Gehäuse 12, welches in Figur 1 lediglich durch eine strichpunktierte Linie angedeutet ist. An dem Gehäuse 12 sind ein Einlassanschluss 14 und ein Auslassanschluss 16 vorhanden.

Zu dem Ventilsystem 10 gehört ein Hauptventil 18, welches in geöffnetem Zustand den Einlassanschluss 14 über einen ersten Strömungsweg 20 mit dem Auslassanschluss 16 verbindet. Zu dem Ventilsystem 10 gehört ferner ein Bypassventil 22, welches in geöffnetem Zustand einen zwischen Einlassanschluss 14 und Hauptventil 18 gelegenen Bereich 24 mit einem stromabwärts vom Hauptventil 18 gelegenen Bereich 26 über einen zweiten Strömungsweg 28 verbindet. Wie noch dargelegt werden wird, ist der minimale Strömungsquerschnitt des zweiten Strömungswegs 28 größer als der minimale Strömungsquerschnitt des ersten Strömungswegs 20. Dies wird in Figur 1 dadurch zum Ausdruck gebracht, dass bei dem Hauptventil 18 in die geöffnete Schaltstellung eine Strömungsdrossel 30 eingezeichnet ist.

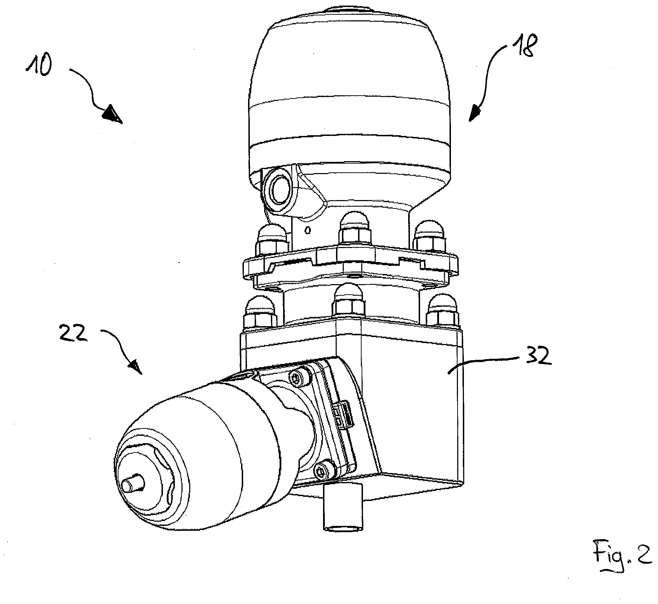

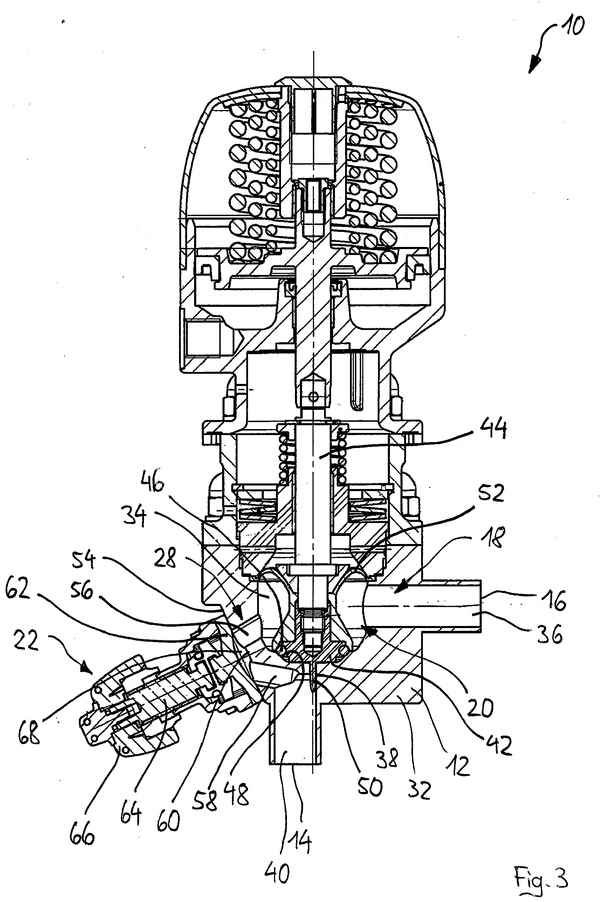

Wie aus Figur 2 ersichtlich ist, ist bei der dort gezeigten Ausführungsform das Bypassventil 22 relativ zum Hauptventil 18 so angeordnet, dass eine Längsachse (ohne Bezugszeichen) des Bypassventils 22 gegenüber einer Längsachse (ohne Bezugszeichen) des Hauptventils 18 einen Winkel von ungefähr 120° aufweist. Der genaue Aufbau des Ventilsystems 10 wird nun insbesondere unter Bezugnahme auf die Figuren 3 bis 5 erläutert:
In einem in etwa quaderförmigen Gehäuseabschnitt 32 ist eine Ventilkammer 34 des Hauptventils 18 ausgebildet. Von dieser führt ein Auslasskanal 36 in einer zu einer Längsachse des Hauptventils 18 orthogonalen Richtung zum Auslassanschluss 16. Koaxial zu der Längsachse des Hauptventils 18 verläuft ausgehend von der Ventilkammer 34 ein Zulaufkanal 38, der einen relativ kleinen Durchmesser aufweist und in einen Einlasskanal 40 mündet, der einen relativ großen Durchmesser aufweist. Der Einlasskanal 40 führt zum Einlassanschluss 14. Der Einlasskanal 40 ist relativ zum Zulaufkanal 38 seitlich versetzt angeordnet.

In der Ventilkammer 34 ist ein Ventilelement 42 des Hauptventils 18 angeordnet. Dieses ist mit einer Betätigungsstange 44 verbunden, die von einer Vorspanneinrichtung (ohne Bezugszeichen) in Schließrichtung beaufschlagt wird. Die Betätigungsstange 44 ist mit einem nicht gezeichneten Antrieb gekoppelt, bei dem es sich um einen pneumatischen, elektromagnetischen oder elektromotorischen Antrieb handeln kann.

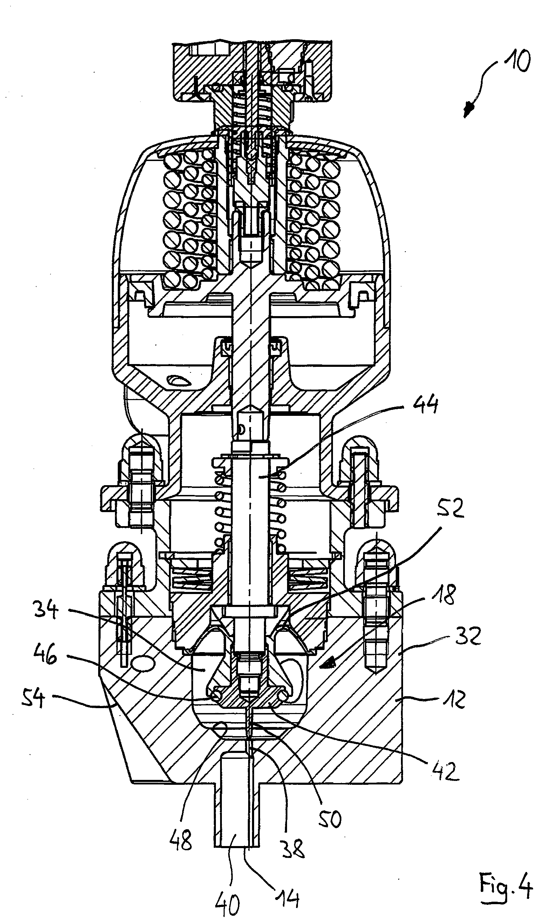

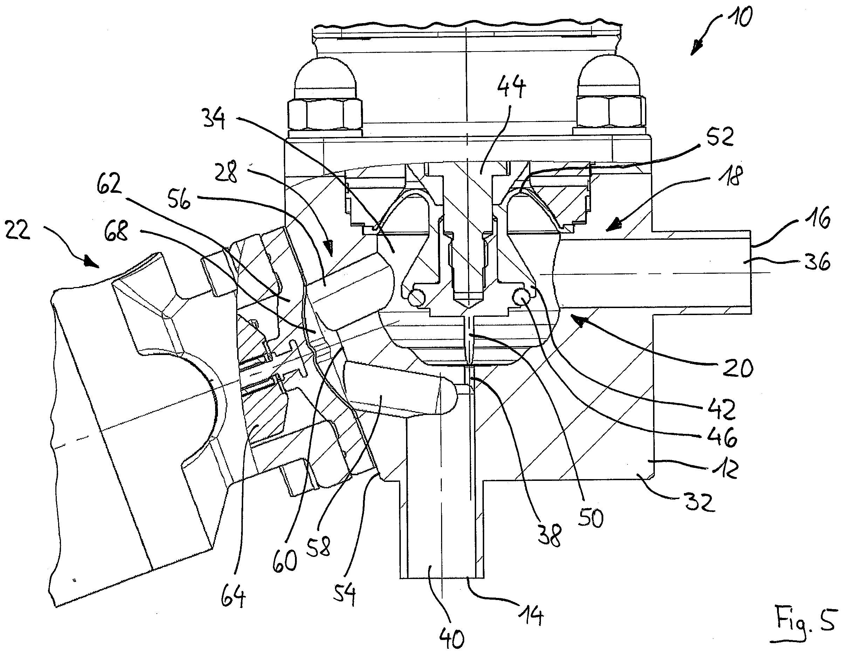

Das Ventilelement 42 ist als relativ flacher Teller ausgebildet, an dessen radial abragendem Rand ein O-Ring 46 angeordnet ist. Dieser wirkt bei geschlossenem Hauptventil 18 mit einem umlaufenden Ventilsitz 48 am Gehäuseabschnitt 32 zusammen. Von dem Ventilelement 42 ragt in den Figuren 3-5 nach unten ein Zapfen 50 ab, der bei geschlossenem Hauptventil 18 (Figur 3) in den stromaufwärts vom Ventilsitz 48 des Hauptventils 18 gelegenen Zulaufkanal 38 eingetaucht ist. Bei vollständig geöffnetem Hauptventil 18 (Figuren 4 und 5) befindet sich die Spitze des Zapfens 50 knapp oberhalb von einer Mündung (ohne Bezugszeichen) des Zulaufkanals 38 in die Ventilkammer 34. Der erste Strömungsweg 20 verläuft somit vom Einlassanschluss 14 über den Einlasskanal 40 und den Zulaufkanal 38 in die Ventilkammer 34 und von dort über den Auslasskanal 36 zum Auslassanschluss 16.

Zu dem Ventilelement 42 gehört auch ein Membranabschnitt 52, der einen in den Figuren 3-5 oberhalb von dem O-Ring 46 gelegenen Bereich des Ventilelements 42 und der Betätigungsstange 44 umhüllt, und der mit seinem in den Figuren 3-5 oberen Rand fluiddicht mit dem Gehäuse 12 verbunden ist. Auf diese Weise wird das Ventilelement 42 gegenüber dem Gehäuse 12 abgedichtet.

Der Abschnitt 32 weist auf seiner in den Figuren 3 und 5 linken Seite eine geneigte Abflachung 54. Von dieser verläuft ein erster Verbindungskanal 56 zur Ventilkammer 34. Dabei erkennt man aus den Figuren 3 und 5, dass der erste Verbindungskanal 56 im Bereich seiner Mündung in die Ventilkammer 34 auf den das Ventilelement 42 und die Betätigungsstange 44 umhüllenden Membranabschnitt 52 gerichtet ist, bei dem es sich insoweit um eine in der Ventilkammer 34 vorhandene Komponente des Hauptventils 18 handelt.

Ein zweiter Verbindungskanal 58 erstreckt sich vom in den Figuren 3 und 5 oberen Ende des Einlasskanals 40 zu der Abflachung 54. Die Mündung des zweiten Verbindungskanals 58 in die Abflachung 54 ist dabei von der Mündung des ersten Verbindungskanals 56 in die Abflachung 54 beabstandet. Zwischen den beiden Mündungen ist ein Dichtsteg 60 gebildet, der bei geschlossenem Bypassventil 22 mit einer Ventilmembran 62 des Bypassventils 22 zusammenwirkt und insoweit einen stegförmigen Ventilsitz bildet. Die Ventilmembran 62 ist über einen Betätigungsabschnitt 64 mit einem manuellen Antrieb 66 verbunden. Der zweite Strömungsweg 28 wird somit durch den zweite Verbindungskanal 58, einen bei geöffnetem Bypassventil 22 zwischen der Ventilmembran 62 und dem Dichtsteg 60 vorhandenen Strömungsraum 68 und den ersten Verbindungskanal 56 gebildet.

Man erkennt aus den Figuren 3 und 5 ohne weiteres, dass der minimale Strömungsquerschnitt des zweiten Strömungswegs 28 über die Länge des zweiten Strömungswegs 28 bei der vorliegenden Ausführungsform ungefähr konstant und deutlich größer ist als der minimale Strömungsquerschnitt des ersten Strömungswegs 20, der bei geöffnetem Hauptventil 18 durch den Zulaufkanal 38 bzw. den Ringspalt zwischen der Spitze des Zapfens 50 und der Mündung des Zulaufkanals 38 gebildet wird. Diese Bereiche entsprechen somit der in Figur 1 gezeichneten Strömungsdrossel 30.

Das Ventilsystem 10 ist beispielsweise in eine verfahrenstechnische Anlage in der Biotech-Industrie, der pharmazeutischen Industrie oder der Lebensmittelindustrie eingebaut, um einen Fluidstrom eines entlang des ersten Strömungswegs 20 strömenden Hauptmediums zu steuern. Hierzu ist das Bypassventil 22 geschlossen, die Ventilmembran 62 liegt also am Dichtsteg 60 an, so dass die Verbindung vom zweiten Verbindungskanal 58 über den Strömungsraum 68 zum ersten Verbindungskanal 56 unterbrochen ist.

Durch die spezifische Ausgestaltung des Hauptventils 18 mit dem einen kleinen Durchmesser aufweisenden Zulaufkanal 38 und dem im Verlaufe einer Öffnungsbewegung des Ventilelements 42 aus diesem austauchenden Zapfens 50 können mit dem Hauptventil 18 sehr kleine Fluidströme sehr präzise gesteuert bzw. geregelt werden. Beim Hauptventil 18 handelt es sich insoweit um ein Kleinstmengen-Regelventil.

Zur Reinigung des erste Strömungswegs 20 und insbesondere des Hauptventils 18 wird der normale Betrieb unterbrochen. Stattdessen wird über den Einlassanschluss 14 ein spezielles Reinigungs- und/oder Spülfluid eingeleitet. Dabei sei an dieser Stelle darauf hingewiesen, dass das Einleiten des Reinigungs- und/oder Spülfluids auch über besonders dafür vorgesehene Einrichtungen erfolgen kann. Dies gilt insbesondere dann, wenn produktführende Räume und/oder Kanäle von Anlagenkomponenten und produktführende Leitungen zwischen diesen Komponenten gereinigt und/oder gespült werden sollen. Das Bypassventil 22 wird nun geöffnet. Somit strömt, selbst bei geöffnetem Hauptventil 18, eine vergleichsweise große Menge an Reinigungs- und/oder Spülfluid über den Einlasskanal 40, den zweiten Verbindungskanal 58, den Strömungsraum 68 und den ersten Verbindungskanal 56 in die Ventilkammer 34.

Durch die Ausrichtung des ersten Verbindungskanals 56 trifft der in die Ventilkammer 34 eintretende Fluidstrahl auf den Membranabschnitt 52 und wird von diesem abgelenkt und verwirbelt. Hierdurch bildet sich in der Ventilkammer 34 eine turbulente und verwirbelte Fluidströmung aus, wodurch so hohe Scherkräfte am Ventilelement 42 und der Begrenzungswand der Ventilkammer 34 erzeugt werden, dass dort vorhandene Verunreinigungen zuverlässig entfernt und mitgerissen werden. Diese werden dann über den Auslasskanal 36 zum Auslassanschluss 16 transportiert.

Der Reinigung- und Spülvorgang wird unter anderem dadurch beendet, dass das Bypassventil 22 manuell geschlossen und hierdurch der zweite Strömungsweg 28 unterbrochen wird.

Bei einer nicht gezeigten Ausführungsform ist der erste Verbindungskanal 56 so ausgerichtet, dass der aus diesem austretende Fluidstrahl zumindest auch eine zur Begrenzungswand der Ventilkammer 34 tangentiale Komponente aufweist. Hierdurch bildet sich eine Drehströmung in der Ventilkammer 34 aus, durch die ebenfalls zuverlässig Verunreinigungen mitgerissen werden. Bei einer weiteren nicht gezeigten Ausführungsform münden mehrere erste Verbindungskanäle in die Ventilkammer 34, welche jeweils unterschiedlich ausgerichtet sind. Beispielsweise kann ein erster Verbindungskanal auf die Mündung des Zulaufkanals 38 in die Ventilkammer 34 gerichtet sein, um dort vorhandene Verunreinigungen besonders zuverlässig zu entfernen.

## Patentansprüche

1. Ventilsystem (10) zum Einsatz in Produktions- und Abfüllanlagen der pharmazeutischen Industrie, der Biotech-Industrie sowie der Lebensmittelindustrie, umfassend ein Gehäuse (12) mit einem Einlassanschluss (14) und einem Auslassanschluss (16), ein Hauptventil in Form eines Kleinstmengen-Regelventils (18), welches in geöffnetem Zustand den Einlassanschluss (14) mit dem Auslassanschluss (16) über einen ersten Strömungsweg (20) verbindet, und ein Bypassventil (22), welches in geöffnetem Zustand einen zwischen Einlassanschluss (14) und Hauptventil (18) gelegenen Bereich (24) mit einem stromabwärts vom Hauptventil (18) gelegenen Bereich (26) über einen zweiten Strömungsweg (28) verbindet, **dadurch gekennzeichnet, dass** ein minimaler Strömungsquerschnitt des zweiten Strömungswegs (28) größer ist als ein minimaler Strömungsquerschnitt des ersten Strömungswegs (20), wobei der zweite Strömungsweg (28) in eine Ventilkammer (34) des Hauptventils (18) mündet, in der ein Ventilelement (42) des Hauptventils (18) angeordnet ist, und wobei der zweite Strömungsweg (28) im Bereich seiner Mündung in die Ventilkammer (34) auf eine Wand der Ventilkammer (34) und/oder auf eine in der Ventilkammer (34) vorhandene Komponente (52) des Hauptventils (18) gerichtet ist.

2. Ventilsystem (10) nach einem der vorhergehenden Ansprüche, **dadurch gekennzeichnet, dass** das Hauptventil (18) ein Sitzventil mit einem umlaufenden Ventilsitz (48) und das Bypassventil (22) ein Membranventil mit einem stegförmigen Ventilsitz (60) sind.

3. Ventilsystem (10) nach Anspruch 2, **dadurch gekennzeichnet, dass** ein Ventilelement (42) des Hauptventils (18) einen Membranabschnitt (52) umfasst, der das Ventilelement (42) gegenüber einem Ventilgehäuse (12) abdichtet.

4. Ventilsystem (10) nach einem der vorhergehenden Ansprüche, **dadurch gekennzeichnet, dass** ein Ventilelement (42) des Hauptventils (18) einen abragenden Zapfen (50) aufweist, der bei geschlossenem Hauptventil (18) in einen stromaufwärts von einem Ventilsitz (48) des Hauptventils (18) gelegenen Abschnitt (38) des ersten Strömungswegs (20) eingetaucht ist.

5. Ventilsystem (10) nach einem der vorhergehenden Ansprüche, **dadurch gekennzeichnet, dass** das Bypassventil (22) manuell und das Hauptventil (18) pneumatisch, elektromagnetisch oder elektromotorisch betätigt werden.

6. Verfahren zum Betreiben eines Ventilsystems (10) nach einem der vorhergehenden Ansprüche, **dadurch gekennzeichnet, dass** es folgende Schritte umfasst: (1) Betreiben des Hauptventils (18) zum Steuern eines Hauptfluids; (2) Schließen des Hauptventils (18); (3) Öffnen des Bypassventils (22) zum Spülen und/oder Reinigen mindestens der Ventilkammer (34) des Hauptventils (18) mit einem Spül- und/oder Reinigungsfluid; (4) Schließen des Bypassventils (22).

## Claims

1. Valve system (10) for use in production and filling lines in the pharmaceutical industry, the biotech industry and the food industry, comprising a body (12) having an inlet port (14) and an outlet port (16), a main valve in the form of a control valve (18) for small volumes which, in the open state, connects the inlet port (14) to the outlet port (16) via a first flow path (20), and a bypass valve (22) which, in the open state, connects a region (24) situated between the inlet port (14) and the main valve (18) to a region (26) situated downstream of the main valve (18) via a second flow path (28), **characterised in that** a minimum flow cross-section of the second flow path (28) is larger than a minimum flow cross-section of the first flow path (20), the second flow path (28) opening into a valve chamber (34) of the main valve (18) in which an element (42) of the main valve (18) is arranged, and the second flow path (28) being directed, in the region of its opening into the valve chamber (34), towards a wall of the valve chamber (34) and/or towards a component (52) of the main valve (18) which is present in the valve chamber (34).

2. Valve system (10) according to one of the preceding claims, **characterised in that** the main valve (18) is a seated valve having a valve seat (48) extending round in a loop and the bypass valve (22) is a diaphragm valve having a valve seat in the form of a weir (60).

3. Valve system (10) according to claim 2, **characterised in that** an element (42) of the main valve (18) comprises a portion (52) of diaphragm which seals off the element (42) from a valve body (12).

4. Valve system (10) according to one of the preceding claims, **characterised in that** an element (42) of the main valve (18) has a projecting spigot (50) which, with the main valve (18) closed, penetrates into a portion (38) of the first flow path (20) which is situated upstream of a valve seat (48) of the main valve (18).

5. Valve system (10) according to one of preceding claims, **characterised in that** the bypass valve (22) is operated manually and the main valve (18) is operated pneumatically, electromagnetically or by electric motor means.

6. Method of operating a valve system (10) according to one of the preceding claims, **characterised in that** it comprises the following steps: (1) operating the main valve (18) to control a main fluid; (2) closing the main valve (18); (3) opening the bypass valve (22) to flush and/or clean at least the valve chamber (34) of the main valve (18) with a flushing and/or cleaning fluid; (4) closing the bypass valve (22) .

## Revendications

1. Système de valves (10) destiné à une utilisation dans des lignes de production et de remplissage de l'industrie pharmaceutique, de l'industrie biotechnologique ainsi que de l'industrie alimentaire, comprenant un boîtier (12) avec un raccord d'entrée (14) et un raccord de sortie (16), une valve principale sous la forme d'une valve de réglage de quantités infimes (18), qui relie, en état ouvert, le raccord d'entrée (14) au raccord de sortie (16) via une première trajectoire d'écoulement (20), et une valve de dérivation (22), qui relie, en état ouvert, une zone (24) située entre le raccord d'entrée (14) et la valve principale (18) à une zone (26) située en aval de la valve principale (18) via une seconde trajectoire d'écoulement (28), **caractérisé en ce qu'**une section transversalement d'écoulement minimale de la seconde trajectoire d'écoulement (28) est plus grande qu'une section transversale d'écoulement minimale de la première trajectoire d'écoulement (20), la seconde trajectoire d'écoulement (28) débouchant dans une chambre de valve (34) de la valve principale (18), dans laquelle est disposé un élément de valve (42) de la valve principale (18), et la seconde trajectoire d'écoulement (28) étant orientée, dans la zone de son débouchement dans la chambre de valve (34), vers une paroi de la chambre de valve (34) et/ou vers une composante (52) de la valve principale (18) existante dans la chambre de valve (34).

2. Système de valves (10) suivant une des revendications précédentes, **caractérisé en ce que** la valve principale (18) est une valve à siège avec un siège de valve périphérique (48) et la valve de dérivation (22) est une valve à membrane avec un siège en forme de barrette (60).

3. Système de valves (10) suivant la revendication 2, **caractérisé en ce qu'**un élément de valve (42) de la valve principale (18) comprend une portion de membrane (52) qui étanchéifie l'élément de valve (42) par rapport à un boîtier de valve (12).

4. Système de valves (10) suivant une des revendications précédentes, **caractérisé en ce qu'**un élément de valve (42) de la valve principale (18) présente un tenon (50) en saillie qui est immergé dans une zone (38) de la première trajectoire d'écoulement (20) située en amont d'un siège de valve (48) de la valve principale (18).

5. Système de valves (10) suivant une des revendications précédentes, **caractérisé en ce que** la valve de dérivation (22) est actionnée de façon manuelle et la valve principale (18) de façon pneumatique, électromagnétique ou par moteur électrique.

6. Procédé de fonctionnement d'un système de valves (10) suivant une des revendications précédentes, **caractérisé en ce qu'**il comprend les étapes suivantes qui consistent: (1) à actionner la valve principale (18) pour commander un fluide principal, (2) à fermer la valve principale (18), (3) à ouvrir la valve de dérivation (22) pour rincer et/ou nettoyer au moins la chambre de valve (34) de la valve principale (18) au moyen d'un fluide de rinçage et/ou de nettoyage, (4) à fermer la valve de dérivation (22).
